# EUROPEAN PATENT APPLICATION

(11) **EP 1 557 345 A2**
(43) Date of publication of application: **27.07.2005**
(21) Application number: 05250345.5
(22) Date of filing: 24.01.2005
(51) Int. Cl.: B62D 53/06

(54) **Trailers for carrying containerised loads**

(30) Priority: 23.01.2004 GB 0401466
(71) Applicant: Raven, Paul Anthony, Stowmarket, IP14 1QW (GB); Raven, Kevin William, Ipswich, IP6 0JH (GB)
(72) Inventor: Raven, Paul Anthony, Stowmarket, IP14 1QW (GB); Raven, Kevin William, Ipswich, IP6 0JH (GB)
(74) Representative: McLean, Robert Andreas

(57) **Abstract**

The present invention relates to a trailer (1) comprising a load bearing chassis (2) that extends between a forwards and rearwards ends (5,7) of the trailer, a plurality of container mounts (16) for securing a container (3) to the chassis, and road running gear (19) including at least two axles (21,22,23) with corresponding sets of road going wheels (26). The container mounts (16) include at least one set of mounts for securing a 20 foot (6.1 m) ISO-format container (3) at an intermediate position on the trailer (1) such that the chassis (2) extends both rearwards and rearwards of the secured container (3) towards the ends (5,7) of the trailer. The chassis (2) is a split chassis having forwards and rearwards chassis sections (4,6) and chassis engaging means (8) by which these sections may be connected to form the chassis (2) and which may be disconnected to form a shortened load bearing chassis (4). The road running gear (19) is split between the forwards and rearwards chassis sections (4,6), with the rearwards chassis section (6) having one fixed axle (23) and the forwards chassis section having at least one axle (21,22). The split between the forwards and rearwards chassis sections (4,6) is such that direct access is provided to rearwardly facing doors (29) of the secured container (3).

## Description

### Background

### (a) Field of the Invention

The present invention relates to trailers for carrying containerised loads.

### (b) Related Art

Flatbed and skeletal trailers often have a rear sliding bogie section that allows the trailers to be extendible between two lengths, for example 6.1m (20 feet) and 12.2 m (40 feet). In one mode of usage, the length of the trailer is locked at either of these lengths for mounting of containers with these lengths. A 13.6 m (45 feet) ISO-format container may also be carried on a 12.2 m trailer. Alternatively, the length of the trailer may be locked in the extended position to permit greater axle loading, according to the law. For example, a 6.1 m (20 feet) ISO-format container above a certain weight may be required by law to be carried by a 12.2 m trailer in order to spread the axle loading.

The extension may be accomplished by having the set of wheels on a bogie which is itself fixed to a slider mechanism for slidably moving the bogie relative to the chassis section.

Extendible trailers allow a driver to load various types of ISO-format container configurations, namely 1 x 12.2 m (40 feet) container standard or "High Cube" height, 1 x 13.6 m (45 feet) container standard or "High Cube" height, 1 x 9.1 m (30 feet) container, 1 x 6.1 m (20 feet) "Heavy" (at least 24 tonne) container standard or "High Cube" height placed in the centre of the trailer for axle loading laws and 2 x 6.1 m (20 feet) containers standard or "High Cube" height. The containers are collected from the docks and given to the operators for delivery. Due to nature of the work the haulier does not know in advance which type of container he may have to carry for the next delivery.

When the trailer is extended, it is able to carry all of the above container sizes, however the "Heavy" 6.1 m container must be centrally mounted in order to comply with axle loading laws. In the extended position, the rear "Heavy" 6.1 m container doors cannot be accessed for unloading without retracting the trailer into the closed position. To close the trailer the driver can operate the locking mechanism from his cab to unlock the section, and then with the rear wheels locked, reverse the cab into its retracted position, closing the trailer fully allowing the container doors to become flush with the rear of the trailer for off-loading.

Because of these benefits, extendible trailers, also called sliding bogie trailers, have been widely adopted within the UK trailer road haulage industry and abroad. Problems and limitation have, however, been noted with sliding bogie trailers. The slider mechanism is normally provided by a nested pair of longitudinal chassis members, which may be locked together at extended and retracted orientations by means of a locking mechanism, which may be a fifth-wheel type mechanism or transversely moving pins which engage through aligned holes on the chassis members. The paired chassis members and locking mechanism inevitably add to manufacturing cost and to the total weight of the unloaded trailer, thereby reducing the potential maximum load carrying capacity.

Sliding bogie trailers also use components which are subject to wear over time, such as neoprene pads or rollers between the paired chassis members. The components are particularly stressed when a trailer is fully loaded with a "Heavy" 6.1 m container weighing up to 40 tonnes, and it becomes necessary to retract the chassis sections in order to unload the container from the rear container doors.

Another problem which is common to both sliding and fixed length trailers is tyre wear, usually referred to as "wheel scrub". In order to meet UK and European axel loading requirements, e.g. EU96/53, it is necessary to provide three sets of axles. However, when manoeuvring at low speed around tight bends, at least one set of wheels will rub sideways on the road surface. Over time this significantly shortens tyre life. The need to replace tyres worn in this way can add typically about £1000 to £2000 per annum to the cost of keeping a trailer on the road. Therefore, one axle is provided with an air-bag suspension which permits the third axle to move between a raised position in which the wheels are off the road to a lowered position in which the wheels are on the road. When the trailer is fully loaded and travelling on the highway, the third axle is lowered in order to meet the national axle loading requirements. At low speeds when manoeuvring, or when carry a lighter load on the highway, the third axle can be raised to reduce tyre wear. This is an effective solution, except that the movable third axle adds about £450 to the manufacturing cost of the trailer.

### Summary of the Invention

It is an object of the present invention to provide a trailer which addresses these issues.

According to the invention, there is provided a trailer for carrying a containerised load, comprising an elongate load bearing chassis that extends between a forwards end of the trailer and a rearwards end of the trailer, a plurality of container mounts for securing ISO-format containers to the load bearing chassis, and road running gear including at least two axles with at least two corresponding sets of road going wheels, wherein the container mounts include at least one set of mounts for securing a 20 foot (6.1 m) ISO-format container at an intermediate position on the trailer such that said load bearing chassis extends rearwards of said secured container towards the rearwards end of the trailer, and extends forwards of said secured container towards the forwards end of the trailer, wherein:
- the load bearing chassis is a split chassis having a forwards chassis section, a rearwards chassis section and load-bearing chassis engaging means by which the forwards chassis section may be directly joined and connected with the rearwards chassis section to form said load being chassis and by which said joined sections may be disconnected and separated to form a shortened load bearing chassis;
- the road running gear is split between the rearwards chassis section and the forwards chassis section, with the rearwards chassis section having one longitudinally fixed axle with one corresponding set of road going wheels, and the forwards chassis section having at least one axle with at least one corresponding set of road going wheels; and
- the split between the forwards and rearwards chassis sections being such that direct access is provided to rearwardly facing doors of said secured container when the rearwards chassis section is disconnected and separated from the forwards chassis section.

The trailer may therefore have both the forward and rearward chassis sections combined when carrying a "Heavy" 6.1 m container on the highway, in order to spread the load across at least one axle, and most preferably two axles, on the forwards section and the single axle on the rearwards section. Then, when a trailer arrives at its destination, which will usually be a loading yard or loading bay, the driver can disconnect the rearwards section from the rest of the trailer so that the container can be unloaded from rearwardly facing doors without the inconvenience of have to unload over chassis members or a floor extending rearwards of those doors. Most conveniently, the driver may then back up directly onto a loading bay from which direct access may then be had to the rear doors of the container.

The trailer also provides the advantage that it may readily be reconfigured to suite different types of container. For example, if a 12.2 m container is to be loaded onto the trailer, then the rearwards section will be joined to the forwards section and be provided with standard container twist-lock mounts. If a light 6.1 m container is carried then the rearwards section can be left behind to be collected later.

A particular advantage of the invention is that the rearwards section can be very inexpensive to manufacture, having only one axle and in any practical embodiment considerably less material in its chassis that the forwards section has.

Therefore, in a fleet of similar such trailers, there may be many more of the rearwards sections than forwards sections. This provides maximum convenience to the fleet operator in being able to reconfigure a trailer at any of a plurality of destinations at which rearwards sections are left when not needed.

The rearwards section may have at least one drop-down support for stabilising the rearwards section when the rearwards and forwards sections are disconnected. Such drop-down supports may be provided rearwards, and preferably also forwards, of the axle of the rearwards section.

In a preferred embodiment of the invention, the rearwards section has at least two drop-down supports for stabilising the rearwards section when the rearwards and forwards sections are disconnected, at least one of said drop-down supports being provided rearwards of the axle of the rearwards section and at least another one of said drop-down supports being provided forwards of said axle.

The trailer may have on the rearwards section one lift-axle which may be raised to lift the corresponding set of road going wheels from the road.

Most preferably, all of the axles are fixed longitudinally to the load bearing chassis. Such a trailer is not an extendible trailer, and therefore avoids the costs and potential problems of wear and additional maintenance over time associated with some extendible trailers.

The road running gear may comprise in a forwards-most portion of the rearwards section one fixed axle with one corresponding set of road going wheels, and in a rearwards-most portion of the forwards section two fixed axles with two corresponding sets of road going wheels. Thus, when the rearwards section is directly joined to the forwards section, the axles of the road running gear form a tri-axle set of road going wheels.

The load-bearing chassis of the trailer preferably has a plurality of transverse chassis tie members which extend between longitudinal chassis members. A first one of these transverse chassis tie members then extends across the rear of the forwards section and a second one of these transverse chassis tie members extends across the front of the forwards chassis section.

The chassis may have load bearing engaging means in the form of a box-member which extends forwards of the rearward section and which removably seats inside a box-sleeve of the forward section when said sections are joined directly together. Both the box-member and the box-sleeve are then located beneath the level of the first and second transverse chassis tie members.

Also described herein is a road-going vehicle, comprising a tractor unit and a trailer for carrying a containerised load, the tractor unit and the trailer having means by which the tractor unit and the trailer may be connected together and disconnected, and the trailer being according to the invention.

The invention further provides a rearward chassis section for a split chassis trailer, said rearwards chassis section comprising road running gear having one fixed axle with one corresponding set of road going wheels, and load bearing chassis engaging means by which the rearwards chassis section may be directly joined to a forwards chassis section for forming a trailer according to the invention.

### Brief Description of the Drawings

The invention will now be further described, by way of example only, and with reference to the accompanying drawings, in which:
Figure 1 is a perspective view from above and to one side of a trailer for carrying a containerised load according to a preferred embodiment of the invention, comprising a load bearing chassis with forwards chassis section directly joined to a rearwards chassis section and with a "Heavy" 6.1 m ISO standard container mounted at an intermediate position on the trailer;
Figure 2 is a side plan view of the trailer of Figure 1;
Figure 3 is a partial perspective view of the trailer of Figure 1, showing part of the forwards section of the trailer when disconnected from the rearwards section;
Figure 4 is a full perspective view of the trailer of Figure 3;
Figure 5 is a more detailed perspective view of the rearwards section of Figure 3; and
Figure 6 is a side plan view of the rearwards section of Figure 3.

### Detailed Description

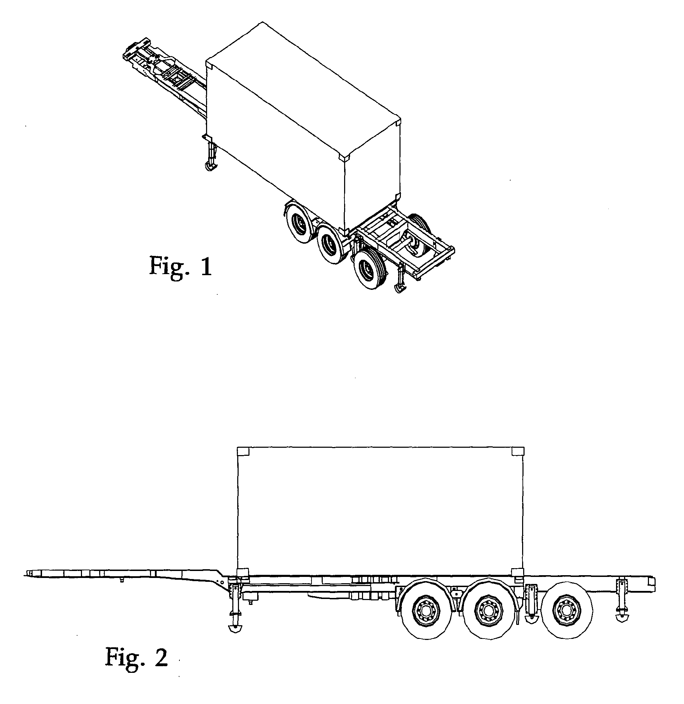

Reference is made first to Figures 1 and 2, which show a skeletal trailer 1 carrying a containerised load, which is here a 20 foot (6.1 m) ISO-format container 3. The trailer has a load bearing steel chassis 2 that extends between a forwards end 5 of the trailer and a rearwards end 7 of the trailer.

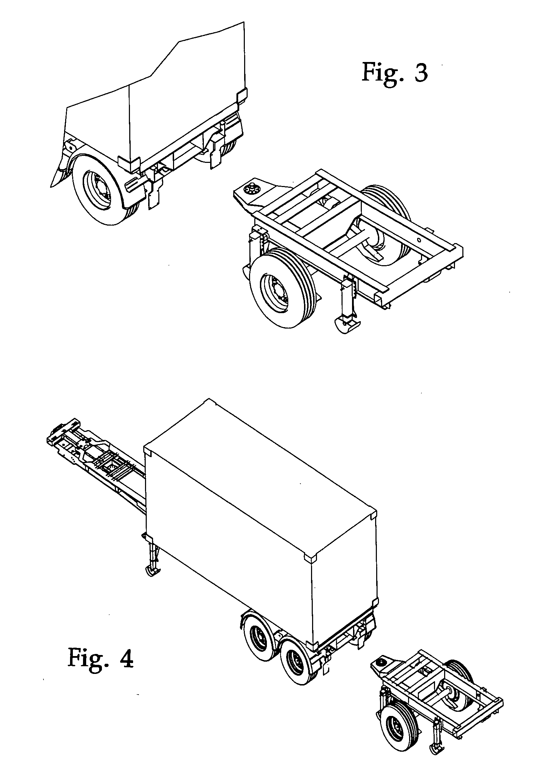

The trailer 1 is a split-chassis trailer, with the load bearing chassis 2 having a forwards chassis section 4 and a rearwards chassis section 6. As shown in Figures 3 and 4, the forwards and rearwards sections 4, 6 may be connected and disconnected to each other by means of a load bearing chassis engaging means which in the preferred embodiment of the invention is in the form of an axial engagement mechanism 8.

The forwards section 4 of the steel chassis 2 has two main parallel elongate load bearing chassis members 11. The trailer 1 is a skeletal "Goose Neck" trailer, with the main forward section chassis members 11 having a load bearing upper surface 10 set 160 mm below the level of two load bearing "Goose Neck" chassis members 9 that extend forwards of the main members 11. According to ISO standards, the 31.6 m and 12.2 m "High Cube" containers have a forwards central raised floor section (not shown) into which the "Goose Neck" forward chassis members 9 are seated when such a container is mounted to the trailer 1. The trailer 1 has a plurality of container mounts 16 for securing such ISO-format containers to the load bearing chassis 2.

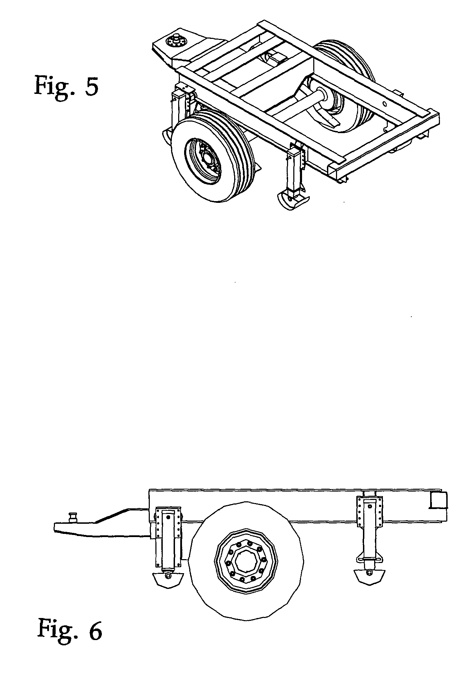

The forwards chassis members 9 of the forwards section 4 support a downwardly facing kin pin 24 for connection with a known fifth-wheel on a tractor unit (not shown). As can be seen from a comparison of Figures 2 and 6, only the forwards section 4 of the load bearing chassis 2 has a king pin mount 24 for connection to a fifth-wheel coupling of a tractor unit (not shown).

The rearwards section 6 of the steel chassis 2 also has two main parallel elongate load bearing chassis members 13, with a load bearing upper surface 15 at the same height as that 10 of the forwards section 4.

Both of the paired main longitudinal chassis members 11, 13 have an outside-to-outside spacing of 1470 mm and have upper surfaces 10, 15 at a height of 1250 mm above the level of the road.

The trailer 1 has road running gear 19 including three axles 21, 22, 23, each having a corresponding set of road going wheels 26. Each of the axles 21, 22, 23 is fixed longitudinally on the trailer. Optionally, the third axle 23 has an air suspension that permits this axle to be lifted, however, this is not necessary to prevent "wheel scrub" as the sections 4, 6 can be separated during low speed manoeuvring, for example at a loading dock.

The axles 21, 22, 23 are closely grouped so as to form a tri-axle set of wheels, with the forward two axles 21, 22 being towards the rear of the forwards section 4, and the rear-most axle 23 being towards the front of the rearwards section 6.

As can be seen most clearly from Figures 3 and 4, the shortened load bearing chassis 2 extends no further rearwards than rearwardly facing doors 29 of the secured container 3.

Therefore, when the sections 4, 6 are separated, direct access is provided to the rearwardly facing doors 29 of the secured container 3. Although not shown in the drawings, both the forwards section and the rearwards section would be provided with rear lights, reflectors and turning indicators according to national requirements. Also not shown in the drawings are electrical connectors for electrical connection of the lights in the rearwards section 6, and also air line connectors for pneumatic connection of the running gear in the rewards section 6 to that in the forwards section 4.

The main chassis members 11, 13 are in the form of steel I-beams or C-beams, which present an inwards facing C-section shape. Each of the pairs of main chassis members 11, 13 is spaced apart by several transverse load bearing tie beams, including in the forwards section 4 a forward-most transverse beam 12, a rearward-most transverse beam 14 and a middle transverse beam (not shown), each of which extends laterally outside the parallel chassis members 11 to support two corresponding pairs of standard twist-lock container mounts 16 for connecting to various ISO standard containers. At least some of the container mounts may be laterally retractable container mounts, similar to those described in patent document WO 03/011636 A1, the contents of which are hereby incorporated by reference. This document describes a trailer for carrying a containerised load, which comprises a chassis section formed utilising two substantially parallel elongate members, and one or more support members for supporting said containerised load. The support members are movable between a first position in which the support member is stowed between the elongate chassis members when not in use to support a containerised load, and a second position in which the support member extends away from the elongate chassis members for supporting said containerised load.

The support members may then be moved into positions in which they may be used to support a containerised load, or stowed in positions where they are out of the way, allowing other support members and/or non-movable support members to be used, thus enabling the trailer to carry different configurations of containerised loads.

To facilitate this, the support members when in the first position lie substantially at or below the level the elongate members between which the support member is stowed. The containerised load may then rest on the elongate members. When the support members are fully below the elongate members, loaded containers may sit flush onto the top chassis beams.

Then, when the support members are in the second position, the support members lie substantially at or above the level of elongate chassis members from which the support member extends. The container may then more readily be secured to such a support in the second position.

The rearwards section 6 has a number of transverse tie beams, including a forward-most transverse beam 18, and a rearward-most transverse beam 20. Of these transverse beams, only the rearward-most transverse beam 20 of the rearwards section 6 extends laterally outside the parallel chassis members 13 to support two corresponding pairs of standard twist-lock mounts 16 for connecting to various ISO standard containers.

The length of the trailer 1 and distance between the forward-most and rearward-most container mounts 16 is such that the trailer may carry a 12.2 m ISO standard container across both the forwards and rearwards sections 4, 6.

However, in the drawings, the container 3 is mounted on the rearward-most and middle container mounts 16 of the forwards section 4, so that when the forwards and rearwards section 4, 6 are joined directly together, the container 3 is carried at an intermediate position on the trailer 1, with rear doors 29 of the container above the rearward-most transverse tie beam 14 of the forwards section 4. The load bearing chassis 2 therefore extends rearwards of the secured container 3 towards the rearwards end 7 of the trailer 1, and extends forwards of the secured container 3 towards the forwards end 5 of the trailer 1.

The forwards chassis section 4 has a pair of retractable support landing legs 30, shown in the down position, which would normally be in the up position if a tractor unit (not shown) were attached to the trailer 1.

The rearwards section 6 has two pairs of retractable support landing legs 31, 32 which are lowered prior to disconnecting the rearwards section 6 from the forwards section 4. The rearwards section 6 has a centre of gravity behind the third axle 23, and so after a driver has lowered at least one of the rear pair of drop down supports 32, and disconnected the air and electrical connections to the rearwards section 6, the driver disengages the axial engaging means 8, and then uses a tractor unit (not shown) to pull the forwards section 4 free of the rearwards section 6.

With reference now also to Figures 5 and 6, a rearwards male portion 36 of the engagement mechanism 8 extends forwards of the rear chassis members 13 from beneath transverse tie beams 18 to which the male portion 36 is connected. The rearwards male portion 36 is centered on a longitudinal axis 50 of the rearwards section 6. This rearwards male portion 36 of the engagement mechanism has a tapering tip 38 with a rectangular cross-sectional profile in a plane perpendicular to the axis 50. A fixed pin 40 extends upwards from an upper surface 42 of the tip 38 centered on the longitudinal axis 50.

When the sections 4, 6 are joined, the rearwards male portion 36 is seated in a square cross-section sleeve 44 which extends along the axis 50. The sleeve 44 is joined to the chassis 2 beneath transverse tie beams 14 and leads to a fifth-wheel type clasp mechanism (not shown) which receives and engages with the upstanding pin 40 on the male portion 36 of the engagement mechanism 8 when the sections are brought together.

The fifth-wheel type clasp mechanism may be operated by the driver either manually, for example by means of a pull handle (not shown) at the side of the forwards section 4, or remotely by means of a pneumatic actuator (not shown).

The central axial arrangement of the components 36, 38, 40, 44 of the engagement mechanism 8 helps to balance forces on these components both during connection and disconnection of the chassis sections 4, 6 and also during operation on the road of the trailer 1. The engagement mechanism 8 is therefore referred to herein as an axial chassis engaging means.

The invention is particularly useful with a so-called "Goose Neck" trailer for carrying a "High Cube" container, that is, a trailer having a forwards upwards rising section for connection to a tractor unit.

The trailer described above is well-suited to both the UK and European markets and allows all container configurations, including "High Cube" containers, to be carried, as well as loaded or unloaded from rear container doors without the inconvenience of having to move goods over chassis members, or the expense of having to provide a sliding chassis or a sliding bogie section. Such a trailer can comply with all current axle weight laws including relevant bridge height legislation on the super single 385 x 65 x R22.5 tyre size or equivalent, which is the industry standard low cost tyre specification.

It should be noted that the invention is not limited to trailers that may be combined with a tractor unit to form an articulated vehicle. For example, the invention is equally applicable to a trailer that includes an integral articulated or non-articulated motive unit. Therefore, the term "trailer" as utilised herein is intended to mean any form of movable support structure capable of supporting a freight container or tanker container for transportation and is not limited to a trailer arranged for use with a separate tractor unit or road going vehicle.

Modifications may be incorporated to the trailer described in detail above without departing from the scope of the present invention as claimed. For example, although the invention has been described with reference to a fixed axle trailer the invention is applicable to sliding-axle non-extendible trailers, where it is the axle or axles in the forwards chassis section which slide. Similarly, although the invention has been described when used with a skeletal trailer, the invention may also be useful for flatbed trailers, or any trailer in which a section has a load bearing floor, as long as such a trailer has container mounting points for a 20 foot (6.1 m) ISO-format container at an intermediate position on the trailer.

## Claims

1. A trailer for carrying a containerised load, comprising an elongate load bearing chassis that extends between a forwards end of the trailer and a rearwards end of the trailer, a plurality of container mounts for securing ISO-format containers to the load bearing chassis, and road running gear including at least two axles with at least two corresponding sets of road going wheels, wherein the container mounts include at least one set of mounts for securing a 20 foot (6.1 m) ISO-format container at an intermediate position on the trailer such that said load bearing chassis extends rearwards of said secured container towards the rearwards end of the trailer, and extends forwards of said secured container towards the forwards end of the trailer, wherein:
- the load bearing chassis is a split chassis having a forwards chassis section, a rearwards chassis section and load-bearing chassis engaging means by which the forwards chassis section may be directly joined and connected with the rearwards chassis section to form said load being chassis and by which said joined sections may be disconnected and separated to form a shortened load bearing chassis;
- the road running gear is split between the rearwards chassis section and the forwards chassis section, with the rearwards chassis section having one longitudinally fixed axle with one corresponding set of road going wheels, and the forwards chassis section having at least one axle with at least one corresponding set of road going wheels; and
- the split between the forwards and rearwards chassis sections being such that direct access is provided to rearwardly facing doors of said secured container when the rearwards chassis section is disconnected and separated from the forwards chassis section.

2. A trailer for carrying a containerised load as claimed in Claim 1, in which the rearwards chassis section has a centre of gravity that is rearwards of the axle of the rearwards chassis section.

3. A trailer for carrying a containerised load as claimed in Claim 1 or Claim 2, in which the rearwards chassis section has at least one drop-down support for stabilising the rearwards chassis section when the rearwards and forwards chassis sections are disconnected, said at least one drop-down support being provided rearwards of the axle of the rearwards chassis section.

4. A trailer for carrying a containerised load as claimed in any preceding claim, in which the rearwards chassis section has at least two drop-down supports for stabilising the rearwards chassis section when the rearwards and forwards chassis sections are disconnected, at least one of said drop-down supports being provided rearwards of the axle of the rearwards chassis section and at least another one of said drop-down supports being provided forwards of said axle.

5. A trailer for carrying a containerised load as claimed in any preceding claim, comprising one lift-axle which may be raised to lift a corresponding set of road going wheels from the road, said lift-axle being provided on the rearwards chassis section.

6. A trailer for carrying a containerised load as claimed in any preceding claim, in which all of the axles are longitudinally fixed to the load bearing chassis.

7. A trailer as claimed in any preceding claim, in which the road running gear comprises in a forwards-most portion of the rearwards chassis section one longitudinally fixed axle with one corresponding set of road going wheels, and in a rearwards-most portion of the forwards chassis section two longitudinally fixed axles with two corresponding sets of road going wheels.

8. A trailer as claimed in any preceding claim, in which only the forwards chassis section of the load bearing chassis has a king pin mount for connection to a fifth-wheel coupling of a tractor unit.

9. A trailer as claimed in any preceding claim, in which the forwards chassis section has is a "Goose Neck" configuration, with a forwards-most portion of the load bearing chassis being higher than the remainder of the chassis.

10. A trailer as claimed in any preceding claim, in which the load-bearing chassis has a plurality of transverse chassis members tie members which extend between longitudinal chassis members, a first one of said transverse chassis tie members extending across the rear of the forwards chassis section and a second one of said transverse chassis tie members extending across the front of the forwards chassis section, and said load bearing chassis engaging means is a box-member extending forwards of the rearward section that is removably seated inside a box-sleeve of the forward section when said sections are joined together, both the box-member and the box-sleeve being located beneath the level of said first and second transverse chassis tie members.

11. A rearward chassis section for a split chassis trailer, said rearwards chassis section comprising road running gear having one fixed axle with one corresponding set of road going wheels, and load bearing chassis engaging means by which the rearwards chassis section may be directly joined to a forwards chassis section for forming a trailer as claimed in any preceding claim.
